# EUROPÄISCHE PATENTSCHRIFT

(11) **EP 2 176 917 B1**
(45) Veröffentlichungstag und Bekanntmachung des Hinweises auf die Patenterteilung: **21.09.2011**
(21) Anmeldenummer: 08785177.0
(22) Anmeldetag: 29.07.2008
(51) Int. Cl.: H01M 10/04, H01M 2/22

(54) **EINZELZELLE FÜR EINE BATTERIE SOWIE VERFAHREN ZU DEREN HERSTELLUNG**
INDIVIDUAL CELL FOR A BATTERY AND METHOD FOR THE PRODUCTION THEREOF
ELÉMENT INDIVIDUEL POUR UNE BATTERIE AINSI QUE SON PROCÉDÉ DE FABRICATION

(30) Priorität: 06.08.2007 DE 102007036849; 20.12.2007 DE 102007063181
(43) Veröffentlichungstag der Anmeldung: 21.04.2010
(73) Patentinhaber: Daimler AG, 70327 Stuttgart (DE)
(72) Erfinder: MEINTSCHEL, Jens, 73730 Esslingen (DE); SCHRÖTER, Dirk, 71364 Winnenden (DE)
(74) Vertreter: JENSEN & SON
(86) Internationale Anmeldenummer: PCT/EP2008/006229
(87) Internationale Veröffentlichungsnummer: WO 2009/018942

(56) Entgegenhaltungen:
- EP-A- 1 202 371
- DE-A1- 10 105 877
- US-A- 5 871 861
- US-A1- 2002 146 620
- US-A1- 2006 040 176
- US-A1- 2007 048 613

## Beschreibung

Die Erfindung betrifft eine Einzelzelle für eine Batterie mit einem innerhalb eines Zellengehäuses angeordneten Elektrodenstapel, dessen einzelnen Elektroden, vorzugsweise Elektrodenfolien, mit Stromableiterfahnen elektrisch leitend verbunden sind, wobei zumindest Elektroden unterschiedlicher Polarität durch einen Separator, vorzugsweise eine Separatorfolie, voneinander isolierend getrennt sind, bei welcher Einzelzelle Stromableiterfahnen gleicher Polarität elektrisch leitend miteinander zu einem Pol verbunden sind, gemäß dem Oberbegriff des Anspruchs 1 sowie ein entsprechendes Verfahren zur Herstellung der Einzelzelle gemäß dem Oberbegriff des Anspruchs 12, wie beides beispielsweise in der Energietechnik, hierbei insbesondere in der zumindest unterstützend batteriebetriebenen Fahrzeugtechnik eingesetzt und hier als bekannt unterstellt wird.

Die DE 101 05 877 A1 betrifft eine Einzelzelle für eine Batterie, welche Einzelzelle einen innerhalb eines Zellengehäuses angeordneten Elektrodenstapel aufweist. Einzelne Elektroden, vorzugsweise Elektrodenfolien, sind mit Stromableiterfahnen elektrisch leitend verbunden, wobei Elektroden unterschiedlicher Polarität durch einen Separator, vorzugsweise einer Separatorfolie, voneinander elektrisch isolierend getrennt sind. Die Stromableiterfahnen gleicher Polarität sind elektrisch leitend miteinander zu einem Pol verpresst und/oder verschweißt. Des weiteren wird in dieser Schrift ein Verfahren zur Herstellung derartige Einzelzellen vorgestellt.

Aus der EP 1 202 371 A1 ist gleichfalls eine Einzelzelle bekannt, deren Elektrodenstapel von einem elektrisch isolierenden Rahmen umgeben ist. Der Rahmen befindet sich in einer elektrisch isolierenden Außenhülle mit zwei Flachseiten.

Die US 2002/0146620 Al offenbart ebenfalls eine Einzelzelle einer Batterie, mit einem Zellengehäuse aus einem elektrisch isolierendem Material. In dem Zellengehäuse ist ein Elektrodenstapel angeordnet, dessen gleichnamige Elektroden elektrisch leitend zu Polen zusammengefasst sind. Die beiden Pole sind dichtend aus dem Zellengehäuse heraus geführt.

Insbesondere bei Lithium-lonen-Zellen für Mild-Hybrid Fahrzeuge, die sinnvollerweise als Flachzellen ausgeführt sind, werden mit elektrochemisch wirksamen Materialien beschichtete Aluminium- und Kupferfolien als Elektrodenfolien verwendet. Die Elektrodenfolien werden zu einem Elektrodenstapel übereinander gestapelt, wobei die einzelnen Elektrodenfolien durch einen Separator, vorzugsweise ebenfalls als eine Folie ausgeführt, voreinander elektrisch und auch räumlich getrennt werden. Die Kontaktierung einer Elektrodenfolie nach außen wird mittels einer an der Elektrodenfolie angeschweißten Stromableiterfahne vorgenommen, die durch das Zellengehäuse geführt werden muss. Da das Zellengehäuse einer Einzelzelle üblicherweise aus Metall, vorzugsweise aus Aluminium gebildet ist, müssen die Strömableiterfahnen im Durchführungsbereich unter anderem elektrisch isoliert werden. Die Dichtigkeit des Zellengehäuses im Durchführungsbereich ist nur sehr schwierig und ausgesprochen aufwändig herzustellen. Insbesondere betrifft dieses Problem sowohl die Druckfestigkeit als auch die Abdichtung gegen Feuchtigkeit. So ist unter anderem der Eintrag von Feuchte immer noch ein sehr schwierig und ausgesprochen aufwändig zu lösendes Problem.

Der Erfindung liegt daher die Aufgabe zugrunde, eine verbesserte Einzelzelle für eine Batterie sowie ein verbessertes Verfahren zu deren Herstellung anzugeben, deren Dichtigkeit verbessert ist und bei der die Herstellungskosten möglichst reduziert sind.

Hinsichtlich der Einzelzelle für eine Batterie wird die Aufgabe erfindungsgemäß durch die im Anspruch 1 angegebenen Merkmale gelöst. Hinsichtlich des Verfahrens zu Herstellung der Einzelzelle für eine Batterie wird die Aufgabe erfindungsgemäß durch die im Anspruch 8 angegebenen Merkmale gelöst.

Vorteilhafte Ausgestaltungen der Erfindung sind Gegenstand der Unteransprüche.

Bei der erfindungsgemäßen Einzelzelle gemäß Anspruch 1 können elektrische Pole durch die vorgeschlagene Kontaktierung der Stromableiterfahnen der Elektrodenfolien einer Einzelzelle einer Batterie ohne aufwändige Abdichtungsmaßnahmen vom Inneren der Einzelzelle nach außen geführt werden. Dabei geschieht die Kontaktierung insbesondere mittels Durchschweißen einer zugehören Außenseite, um die im Inneren liegenden Elektrodenfolien nach außen zu kontaktieren.

In besonderer Weise wird als Stromableiterfahne ein nach außerhalb des Elektrodenstapels geführter Randbereich der jeweiligen Elektrodenfolie verwendet, wodurch eine aufwändige Kontaktierung von Elektrodenfolie und Stromableiterfahne entfällt. Gleichzeitig ist diese Art der Kontaktierung sehr sicher gegen zumindest viele, insbesondere äußere Einflüsse wie Stöße oder Vibrationen.

In besonderer Weise erfolgt, insbesondere bei bipolaren Einzelzellen, die Kontaktierung direkt zu den gegenüberliegen Außen-, insbesondere Flachseiten des Zellengehäuses, wobei diese Außen-, insbesondere Flachseiten gegeneinander elektrisch isoliert sind. Auf diese Weise werden Stromableiterfahnen einer Polarität direkt mit einer Außenseite, vorzugsweise einer Flachseite, des Zellengehäuses, insbesondere einer Flachzelle, verschweißt und/oder verpresst, wobei die Außenseiten unterschiedlicher Polarität elektrisch voneinander isoliert sind.

Durch eine Anordnung des Elektrodenstapels in einem randseitig umlaufenden, insbesondere elektrisch isolierenden Rahmen, kann in vorteilhafter Weise eine zusätzliche isolierende Anordnung eingespart werden. Weiterhin ist die Handhabbarkeit der Einzelzelle erleichtert bzw. sicherer gestaltet.

In einer Weiterbildung der Erfindung wird zwischen zwei elektrisch leitende Flachseiten des Zellengehäuses ein randseitig umlaufender sowie elektrisch isolierender Rahmen angeordnet, der zwei elektrisch voneinander isolierte und voneinander beabstandete Materialrücknahmen aufweist. In diesen Materialrücknahmen werden die Stromableiterfahnen jeweils einer Polarität angeordnet. In sinnvoller Weise ist die in Richtung der Stapelung der Elektroden gemessene lichte Höhe einer Materialrücknahme kleiner oder gleich der entsprechenden Erstreckung der unbeeinflusst übereinander gestapelten zugehörigen Stromableiterfahnen und deren parallel zur Flachseite einer Elektrodenfolie gemessene Tiefe größer oder gleich der entsprechenden Erstreckung der zugehörigen Stromableiterfahnen. Hierdurch sind die Stromableiterfahnen sicher in den Materialrücknahmen gehaltert und können bei insbesondere dichter Verbindung zwischen Rahmen und Außen-/Flachseiten elektrisch leitend mit diesen verpresst sein.

Gemäß einer sinnvollen Weiterführung der Erfindung wird die elektrische Verbindung zwischen dem Zellengehäuse und einem "+" bzw. "-" Pol am Elektrodenstapel erst während und insbesondere nach der Montage des Zellengehäuses und zwar von außen durch ein Schweiß- und/oder Pressverfahren hergestellt, in bevorzugter Weise mittels eines Laserstrahl-Schweißverfahrens.

In bevorzugter Weise wird bei einem Schweißverfahren die Gehäusewand der betreffenden Außenseite und weiter in der Tiefe die Stromableiterfahnen des

Elektrodenstapels partiell aufgeschmolzen, wodurch eine stoffschlüssige Verbindung hergestellt werden kann.

Gemäß einer sinnvollen Weiterführung der Erfindung umfasst eine Schweißnaht, in Richtung der Stapelung der Elektroden betrachtet, alle Stromableiterfahnen bzw. geht durch diese hindurch.

Gemäß einer Weiterbildung der Erfindung umfasst eine Schweißnaht, in Richtung der Stapelung der Elektroden betrachtet, nicht nur alle Stromableiterfahnen sondern auch die entsprechende elektrisch leitende Außenseite des Zellengehäuses der Einzelzelle bzw. geht sie auch durch diese hindurch.

In vorteilhafter Weiterbildung der Erfindung kann die Anbindung der entsprechenden Flachseite des Zellengehäuses, insbesondere eines Alugehäuses mit Kupferfolie als Pol, mittels Einlegen einer Folie aus Zusatzwerkstoff, z. B. Nickel, verbessert werden.

Gemäß einer vorteilhaften Weiterbildung der Erfindung werden Pole erst mit einem am Ende vorgenommenen finalen Schweißvorgang auf die entsprechenden Außenseiten, insbesondere Flachseiten des Zellengehäuses geschaltet.

Durch eine oder mehrere der genannten Maßnahmen ist es möglich, bei einer preiswerten Herstellung den Aufbau eines Zellengehäuses zu vereinfachen, die Vibrationssicherheit und damit die Stabilität, die Lebensdauer sowie dadurch wiederum auch die Verwendungsvielfalt zu erhöhen, eine gute Bauraumausnutzung innerhalb eines Batteriekastens zu ermöglichen, insbesondere auch durch die nun möglichen variablen Kontaktierungspositionen. Insbesondere ist auch der Ausschuss durch das vereinfachte Kontaktierungsverfahren verringert. Des Weiteren ist durch die einfache Kontaktierung an der verschlossenen Einzelzelle deren Herstellung deutlich erleichtert. Ferner ist durch die stoffschlüssige Kontaktierung der Stromableiterfahnen die Stromtragfähigkeit verbessert. Auch liegt keine Schwächung der Druckdichtigkeit des Zellengehäuses der Einzelzelle vor, da keine Kontaktdurchführung der Pole erfolgt. Hiermit ist direkt auch die Verbesserung der Dichtigkeit des Inneren des Zellengehäuses gegenüber einem Durchtritt an Feuchtigkeit verbunden.

Ausführungsbeispiele der Erfindung werden im Folgenden anhand von Zeichnungen näher erläutert.

Dabei zeigen:
- Fig. 1: schematisch eine Schnittdarstellung eines Elektrodenstapels einer Flachzelle,
- Fig. 2: schematisch eine Gesamtansicht eines Elektrodenstapels einer Flachzelle gemäß Figur 1,
- Fig. 3: schematisch eine Schnittdarstellung eines Elektrodenstapels gemäß Figur 1, welcher in einem Rahmen angeordnet ist,
- Fig. 4: schematisch eine Gesamtansicht des in dem Rahmen angeordneten Elektrodenstapels gemäß Figur 3,
- Fig. 5: schematisch eine Schnittdarstellung des in dem Rahmen angeordneten Elektrodenstapels gemäß Figur 3 mit zwei an dem Rahmen angeordneten Flachseiten,
- Fig. 6: schematisch eine Vergrößerung eines Randbereichs des in dem Rahmen angeordneten Elektrodenstapels mit zwei an dem Rahmen angeordneten Flachseiten gemäß Figur 5,
- Fig. 7: schematisch eine Vergrößerung des Randbereichs des in dem Rahmen angeordneten Elektrodenstapels mit zwei an dem Rahmen angeordneten Flachseiten gemäß Figur 6 und einer eingebrachten Schweißnaht, und
- Fig. 8: schematisch eine Gesamtansicht einer Flachzelle.

Einander entsprechende Teile sind in allen Figuren mit den gleichen Bezugzeichen versehen.

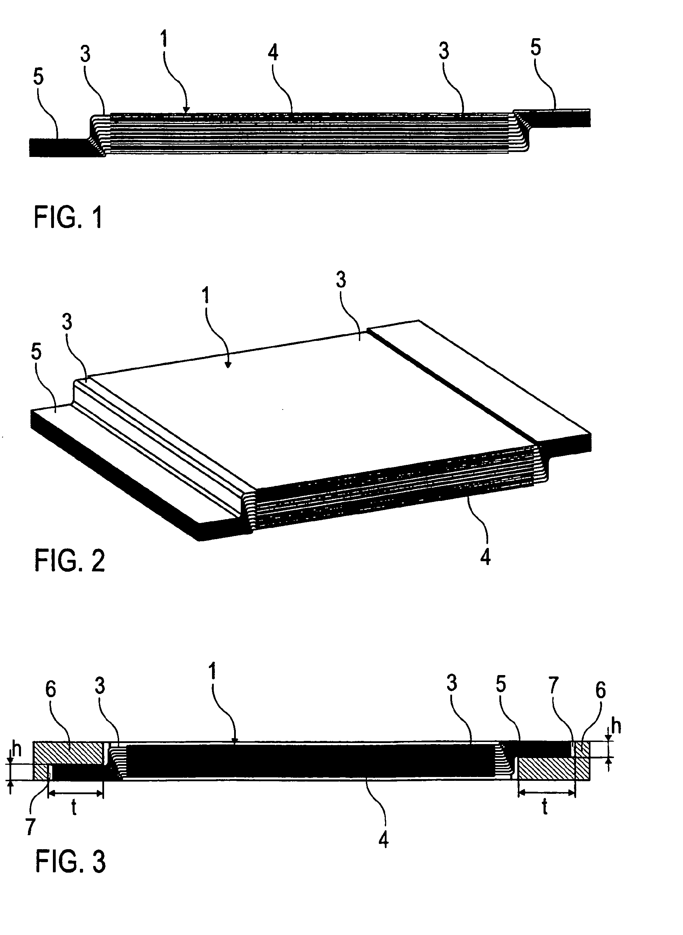

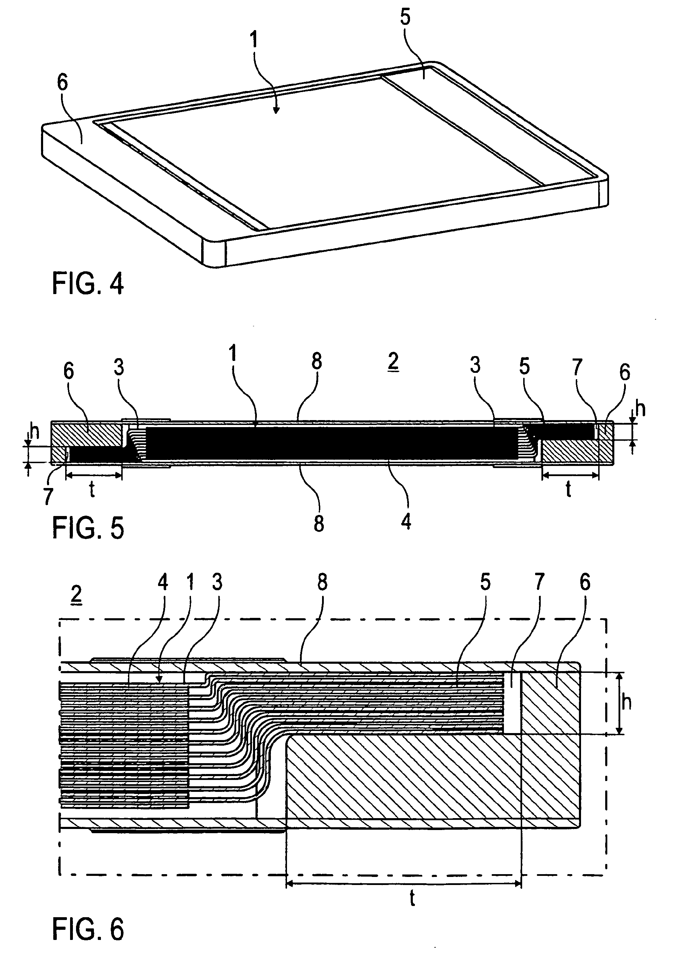

Figur 1 stellt eine Schnittdarstellung eines Elektrodenstapels 1 einer in den Figuren 5 bis 8 näher dargestellten Flachzelle 2 dar. In einem mittleren Bereich sind dabei Elektrodenfolien 3 unterschiedlicher Polarität, insbesondere Aluminium- und/oder Kupferfolien und/oder Folien aus einer Metalllegierung, übereinander gestapelt und mittels eines Separators 4, insbesondere einer Separatorfolie, elektrisch voneinander isoliert.

In einem über den mittleren Bereich des Elektrodenstapels 1 überstehenden Randbereich der Elektrodenfolien 3, den Stromableiterfahnen 5, sind Elektrodenfolien 3 gleicher Polarität elektrisch miteinander verbunden. Dabei werden die Stromableiterfahnen 5 elektrisch leitend miteinander verpresst und/oder verschweißt und bilden die Pole des Elektrodenstapels 1.

Figur 2 zeigt den Elektrodenstapel 1 der Flachzelle 2 gemäß Figur 1 in einer Gesamtansicht.

Figur 3 stellt eine Schnittdarstellung des Elektrodenstapels 1 gemäß Figur 1 dar, wobei der Elektrodenstapel 1 in einem den Elektrodenstapel 1 randseitig umlaufenden Rahmen 6 angeordnet ist. Dieser Rahmen 6 weist zwei voneinander beabstandete Materialrücknahmen 7 auf, die dabei so ausgebildet sind, dass die aus den Stromableiterfahnen 5 gebildeten Pole in den Materialrücknahmen 7 angeordnet werden. Die lichte Höhe h der Materialrücknahmen 7 ist so ausgebildet, dass sie der entsprechenden Erstreckung der unbeeinflusst übereinander gestapelten Stromableiterfahnen 5 entspricht oder geringer als diese ist. Die Tiefe t der Materialrücknahmen 7 entspricht der entsprechenden Erstreckung der Stromableiterfahnen 5 oder ist größer ausgebildet als diese. Der Rahmen 6 ist vorzugsweise aus einem elektrisch isolierenden Material gefertigt, so dass die aus den Stromableiterfahnen 5 gebildeten Pole unterschiedlicher Polarität elektrisch voneinander isoliert sind und in vorteilhafter Weise auf zusätzliche Anordnungen zu einer elektrischen Isolation verzichtet werden kann.

Figur 4 zeigt eine Gesamtansicht des in dem Rahmen 6 angeordneten Elektrodenstapels 1 gemäß Figur 3.

Figur 5 stellt eine Schnittdarstellung des in dem Rahmen 6 angeordneten Elektrodenstapels 1 gemäß Figur 3 dar, wobei an dem Rahmen 6 zwei Flachseiten 8 angeordnet sind. Eine Befestigung der Flachseiten 8 erfolgt in nicht näher dargestellter Weise mittels Kleben und/oder Umbördeln der Flachseiten 8 in eine nicht näher dargestellte umlaufende Aussparung in dem Rahmen 6. Der Rahmen 6 und die Flachseiten 8 bilden dabei ein Zellengehäuse zu einem Schutz des Elektrodenstapels 1 vor eindringenden Partikeln, Feuchte und vor mechanischen Einwirkungen auf den Elektrodenstapel 1.

Dabei werden die aus den Stromableiterfahnen 5 gebildeten Pole gegen die Flachseiten 8 gepresst, so dass ein elektrisches Potenzial der Stromableiterfahnen 5 an den Flachseiten 8 anliegt, welche mittels des Rahmens 6 voneinander elektrisch isoliert sind.

In einer Weiterbildung der Erfindung kann zwischen den Polen, welche z. B. aus Kupfer gefertigt sind, und den Flachseiten 8, welche z. B. aus Aluminium gefertigt sind, zusätzlich eine nicht näher dargestellte Folie, welche z. B. aus Nickel gefertigt ist, eingebracht werden, um eine verbesserte Anbindung zwischen den Polen und den Flachseiten 8 zu erreichen.

In einer Ausgestaltung der Erfindung ist es weiterhin möglich, eine nicht näher dargestellte elektrisch isolierende Folie zwischen den Polen und den

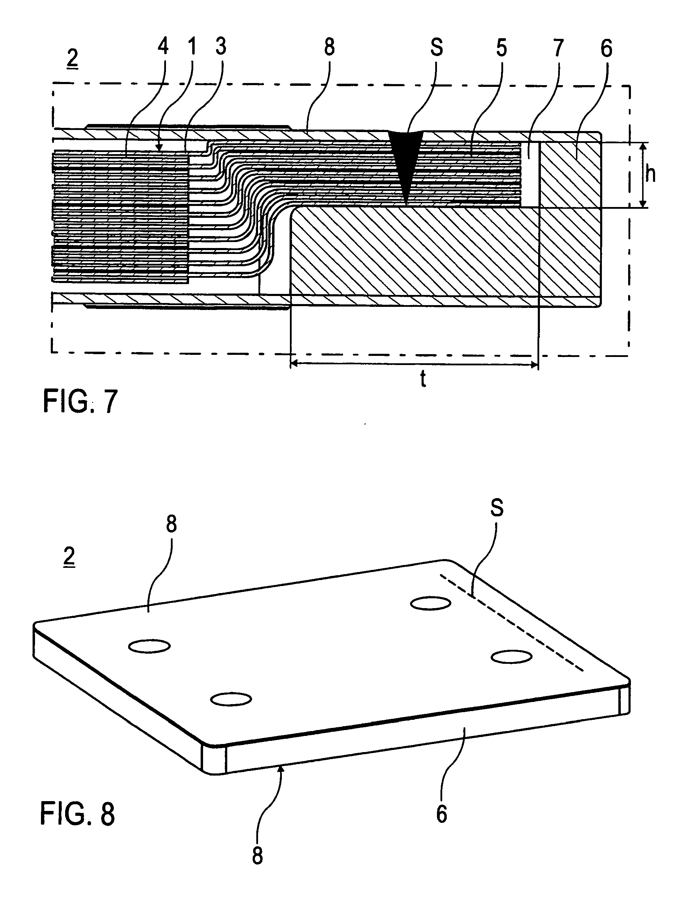

Flachseiten 8 anzuordnen bzw. die Flachseiten 8 einseitig mit einer elektrischen isolierenden Schicht auszuführen, so dass eine elektrische Kontaktierung der Pole mit den Flachseiten 8 erst bei einem, wie in Figur 7 dargestellten, Verschweißen der Flachseiten 8 mit den Polen entsteht.

Figur 6 zeigt eine Vergrößerung eines Randbereichs des in dem Rahmen 6 angeordneten Elektrodenstapels 1 mit zwei an dem Rahmen 6 angeordneten Flachseiten 8 gemäß Figur 5.

Figur 7 stellt die Vergrößerung des Randbereichs des in dem Rahmen 6 angeordneten Elektrodenstapels 1 mit zwei an dem Rahmen 6 angeordneten Flachseiten 8 gemäß Figur 6 dar. Dabei ist, z. B. mittels eines Laserstrahls oder eines anderen Schweißverfahrens, eine Schweißnaht S derart von außen durch die Flachseite 8 in Richtung der Stapelung der Elektrodenfolien 3 in die aus den aus den Stromableiterfahnen 5 gebildeten Pole eingebracht, dass eine durch ein partielles Aufschmelzen der Materialien der Flachseiten 8 und der Stromableiterfahnen 5 stoffschlüssige Verbindung und somit eine elektrische Kontaktierung zwischen den Flachseiten 8 und den zugeordneten Polen entsteht.

Die Schweißnaht S wird sowohl bei verpressten als auch bei verschweißten Stromableiterfahnen 5 gemäß Figur 1 und unabhängig von der Anordnung einer elektrisch isolierenden Folie zwischen den Polen und den Flachseiten 8 gemäß Figur 5 zur elektrischen Kontaktierung der Pole mit den Flachseiten 8 eingebracht, um eine stabile Stromtragfähigkeit durch die stoffschlüssige Verbindung und eine Fixierung des Elektrodenstapels 1 im Inneren des Zellengehäuses sicherzustellen.

Figur 8 zeigt eine Gesamtansicht der Flachzelle 2, wobei die Anordnung der Schweißnaht 9 schematisch mittels einer Strichlinie dargestellt ist. Zu der stoffschlüssigen Verbindung der Flachseiten 8 und der Pole können in einer Weiterbildung der Erfindung alternativ zu der durchgehenden Schweißnaht S auch mehrere lokal angeordnete Schweißnähte S verwendet werden oder mittels eines punktuellen Schweißverfahrens ein oder mehrere nicht näher dargestellte Schweißpunkte von außen durch die Flachseite 8 in Richtung der Stapelung der Elektrodenfolien 3 in die aus den Stromableiterfahnen 5 gebildeten Pole eingebracht werden.

## Patentansprüche

1. Einzelzelle für eine Batterie mit einem innerhalb eines Zellengehäuses angeordneten Elektrodenstapel (1), dessen einzelnen Elektroden, vorzugsweise Elektrodenfolien (3), mit Stromableiterfahnen (5) elektrisch leitend verbunden sind, wobei zumindest Elektroden unterschiedlicher Polarität durch einen Separator (4), vorzugsweise eine Separatorfolie, voneinander isolierend getrennt sind, bei welcher Einzelzelle Stromableiterfahnen (5) gleicher Polarität elektrisch leitend miteinander zu einem Pol verbunden sind, wobei eine Stromableiterfahne (5) einen nach außerhalb des Elektrodenstapels (1) geführten Randbereich der jeweiligen Elektrodenfolie (3) aufweist an deren Strömableiterfahnen (5) eines Pols elektrisch leitend miteinander verpresst und/oder verschweißt sind, **dadurch gekennzeichnet, dass**
das Zellengehäuse zwei elektrisch leitende Flachseiten (8) und einen dazwischen angeordneten, randseitig umlaufenden sowie elektrisch isolierenden Rahmen (6) aufweist.

2. Einzelzelle nach Anspruch 1,
**dadurch gekennzeichnet, dass**
der Rahmen (6) zwei elektrisch voneinander isolierte und voneinander beabstandete Materialrücknahmen (7) aufweist, in welchen Materialrücknahmen (7) die
Stromableiterfahnen (5) jeweils einer Polarität angeordnet sind, wobei die in Richtung der Stapelung der Elektrodenfolien (3) gemessene lichte Höhe (h) einer Materialrücknahme (7) kleiner oder gleich der entsprechenden Erstreckung der unbeeinflusst übereinander gestapelten zugehörigen Stromableiterfahnen (5) ist und deren parallel zur Flachseite einer Elektrodenfolie (3) gemessene Tiefe (t) größer oder gleich der entsprechenden Erstreckung der zugehörigen Stromableiterfahnen (5) ist.

3. Einzelzelle nach Anspruch 1,
**dadurch gekennzeichnet, dass**
die Stromableiterfahnen (5) jeweils einer Polarität mit einem elektrisch leitenden Bereich einer Außenseite des Zellengehäuses elektrisch leitend verbunden sind und dass die betreffenden beiden Bereiche unterschiedlicher Polarität elektrisch voneinander isoliert sind.

4. Einzelzelle nach Anspruch 3,
**dadurch gekennzeichnet, dass**
ein Bereich unterschiedlicher Polarität jeweils eine Flachseite (8) eines Zellengehäuses, vorzugsweise einer Flachzelle (2), ist.

5. Einzelzelle nach Anspruch 1,
**dadurch gekennzeichnet, dass**
die Stromableiterfahnen (5) einer Polarität direkt mit einer Außenseite, vorzugsweise einer Flachseite (8), des Zellengehäuses, insbesondere einer Flachzelle (2), verschweißt und/oder verpresst sind und dass die Außenseiten unterschiedlicher Polarität elektrisch voneinander isoliert sind.

6. Einzelzelle nach Anspruch 1,
**dadurch gekennzeichnet, dass**
eine Schweißnaht (S) in Richtung der Stapelung der Elektrodenfolien (3) betrachtet alle Stromableiterfahnen (5) umfasst bzw. durch diese hindurchgeht.

7. Einzelzelle nach Anspruch 1,
**dadurch gekennzeichnet, dass**
eine Schweißnaht (S) in Richtung der Stapelung der Elektrodenfolien (3) betrachtet alle Stromableiterfahnen (5) sowie die entsprechende elektrisch leitende Außenseite der Einzelzelle umfasst bzw. durch diese hindurchgeht.

8. Verfahren zur Herstellung einer Einzelzelle für eine Batterie, bei welcher Einzelzelle innerhalb eines Zellengehäuses ein Elektrodenstapel (1) angeordnet wird, dessen einzelnen Elektroden, vorzugsweise Elektrodenfolien (3), mit Stromableiterfahnen (5) elektrisch leitend verbunden werden, wobei die Elektroden durch einen Separator (4), vorzugsweise eine Separatorfolie, voneinander isolierend getrennt werden, bei welchem Verfahren Stromableiterfahnen (5) gleicher Polarität elektrisch leitend miteinander zu einem Pol verbunden werden, wobei als Stromableiterfahne (5) ein nach außerhalb des Elektrodenstapels (1) geführter Randbereich der jeweiligen Elektrodenfolie (3) gewählt wird und die Stromableiterfahnen (5) eines Pols elektrisch leitend miteinander verpresst und/oder verschweißt werden
**dadurch gekennzeichnet, dass**
das Zellengehäuse mit zwei elektrisch leitenden Flachseiten (8) ausgestattet wird, zwischen denen ein randseitig umlaufender sowie elektrisch isolierender Rahmen (6) eingebracht wird.

9. Verfahren nach Anspruch 8,
**dadurch gekennzeichnet, dass**
in den Rahmen (6) zwei elektrisch voneinander isolierte und voneinander beabstandete Materialrücknahmen (7) eingebracht werden, dass in die Materialrücknahmen (7) Stromableiterfahnen (5) gleicher Polarität eingelegt werden, wobei die in Richtung der Stapelung der Elektrodenfolien (3) gemessene lichte Höhe (h) einer Materialrücknahme (7) kleiner oder gleich der entsprechenden Erstreckung der unbeeinflusst übereinander gestapelten zugehörigen Stromableiterfahnen (5) gewählt wird und wobei deren parallel zur Flachseite einer Elektrodenfolie gemessene Tiefe (t) größer oder gleich der entsprechenden Erstreckung der zugehörigen Stromableiterfahnen (5) gewählt wird.

10. Verfahren nach Anspruch 8,
**dadurch gekennzeichnet, dass**
die Stromableiterfahnen (5) jeweils einer Polarität mit einem elektrisch leitenden Bereich einer Außenseite des Zellengehäuses elektrisch leitend verbunden werden und dass die betreffenden beiden Bereiche unterschiedlicher Polarität elektrisch voneinander isoliert werden.

11. Verfahren nach Anspruch 10,
**dadurch gekennzeichnet, dass**
als Bereich unterschiedlicher Polarität jeweils eine Flachseite (8) eines Zellengehäuses, vorzugsweise einer Flachzelle (2), gewählt wird.

12. Verfahren nach Anspruch 8,
**dadurch gekennzeichnet, dass**
die Stromableiterfahnen (5) einer Polarität direkt mit einer Außenseite, vorzugsweise einer Flachseite (8), des Zellengehäuses, insbesondere einer Flachzelle (2), verschweißt und/oder verpresst werden und dass die Außenseiten unterschiedlicher Polarität elektrisch voneinander isoliert werden.

13. Verfahren nach Anspruch 8,
**dadurch gekennzeichnet, dass**
mit einer Schweißnaht (S) in Richtung der Stapelung der Elektrodenfolien (3) betrachtet alle Stromableiterfahnen (5) insbesondere auf einmal miteinander verschweißt werden oder dass mit einer Schweißnaht (S) in Richtung der Stapelung der Elektrodenfolien (3) betrachtet alle Stromableiterfahnen (5) durch sie hindurch miteinander verschweißt werden.

14. Verfahren nach Anspruch 8,
**dadurch gekennzeichnet, dass**
mit einer Schweißnaht (S) in Richtung der Stapelung der Elektrodenfolien (3) betrachtet alle Stromableiterfahnen (5) sowie die entsprechende elektrisch leitende Außenseite der Einzelzelle insbesondere auf einmal miteinander verschweißt werden oder dass mit einer Schweißnaht (S) in Richtung der Stapelung der Elektrodenfolien (3) betrachtet alle Stromableiterfahnen (5) sowie die entsprechende elektrisch leitende Außenseite der Einzelzelle durch sie hindurch miteinander verschweißt werden.

## Claims

1. Individual cell for a battery, comprising an electrode stack (1) located within a cell housing, the individual electrodes of which, preferably electrode foils (3), are connected to current drain tabs (5) in an electrically conducting manner, wherein at least electrodes of different polarity are separated and insulated from one another by a separator (4), preferably a separator foil, wherein individual cell current drain tabs (5) of equal polarity are connected to one another in an electrically conducting manner to form a pole, wherein the current drain tab (5) comprises an edge region of the respective electrode foil (3) which is guided towards the outside of the electrode stack (1) and where current drain tabs (5) of a pole are pressed and/or welded to one another in an electrically conductive manner,
**characterised in that**
the cell housing comprises two electrically conducting flat sides (8) and an electrically insulating frame (6) located in between and extending along the edges.

2. Individual cell according to claim 1,
**characterised in that**
the frame (6) comprises two material reliefs (7) which are electrically insulated and arranged at a distance from each other, in which material reliefs (7) the current drain tabs (5) of one polarity each are arranged, wherein the vertical clearance (h) of a material relief (7) as measured in the stacking direction of the electrode foils (3) is less than or equal to the corresponding dimension of the associated current drain tabs (5) stacked on top of one another in a non-influenced manner, and wherein the depth (t) as measured parallel to the flat side of an electrode foil (3) is more than or equal to the corresponding dimension of the associated current drain tabs (5).

3. Individual cell according to claim 1,
**characterised in that**
the current drain tabs (5) of each polarity are connected in an electrically conducting manner to an electrically conducting region of an outside of the cell housing, and **in that** the respective two regions of different polarity are electrically insulated from each other.

4. Individual cell according to claim 3,
**characterised in that**
a region of different polarity is in each case a flat side (8) of a cell housing, preferably of a flat cell (2).

5. Individual cell according to claim 1,
**characterised in that**
the current drain tabs (5) of one polarity are directly welded and/or pressed to an outside, preferably a flat side (8), of the cell housing, in particular of a flat cell (2), and **in that** the outsides of different polarity are electrically insulated from each other.

6. Individual cell according to claim 1,
**characterised in that**
a weld (S) includes all of the current drain tabs (5) or passes through them as viewed in the stacking direction of the electrode foils (3).

7. Individual cell according to claim 1,
**characterised in that**
a weld (S) includes all of the current drain tabs (5) and the respective electrically conducting outside of the individual components or passes through them as viewed in the stacking direction of the electrode foils (3).

8. Method for the production of an individual cell for a battery, in which individual cell there is arranged within a cell housing an electrode stack (1) the individual electrodes of which, preferably electrode foils (3), are connected to current drain tabs (5) in an electrically conducting manner, wherein the electrodes are separated and insulated from one another by a separator (4), preferably a separator foil, in which method current drain tabs (5) of equal polarity are connected to one another in an electrically conducting manner to form a pole, wherein an edge region of the respective electrode foil (3) which is guided to the outside of the electrode stack (1) is chosen as current drain tab (5) and the current drain tabs (5) of a pole are pressed and/or welded to one another in an electrically conductive manner,
**characterised in that**
the cell housing is provided with two electrically conducting flat sides (8) between which an electrically insulating frame (6) extending along the edges is installed.

9. Method according to claim 8,
**characterised in that**
two material reliefs (7) which are electrically insulated and arranged at a distance from each other are placed into the frame (6), and **in that** current drain tabs (5) of equal polarity are installed into the material reliefs (7), wherein the vertical clearance (h) of a material relief (7) as measured in the stacking direction of the electrode foils (3) is chosen to be less than or equal to the corresponding dimension of the associated current drain tabs (5) stacked on top of one another in a non-influenced manner, and wherein the depth (t) as measured parallel to the flat side of an electrode foil is chosen to be more than or equal to the corresponding dimension of the associated current drain tab (5).

10. Method according to claim 8,
**characterised in that**
the current drain tabs (5) of each polarity are connected in an electrically conducting manner to an electrically conducting region of an outside of the cell housing, and **in that** the respective two regions of different polarity are electrically insulated from each other.

11. Method according to claim 10,
**characterised in that**
a flat side (8) of a cell housing, preferably of a flat cell (2), is in each case chosen as a region of different polarity.

12. Method according to claim 8,
**characterised in that**
the current drain tabs (5) of one polarity are directly welded and/or pressed to an outside, preferably a flat side (8), of the cell housing, in particular of a flat cell (2), and **in that** the outsides of different polarity are electrically insulated from each other.

13. Method according to claim 8,
**characterised in that**
all current drain tabs (5) are welded together, in particular at the same time, by means of a weld (S) extending in the stacking direction of the electrode foils (3), or **in that** all current drain tabs (5) are welded together by means of a weld (S) extending in the stacking direction of the electrode foils (3) through the latter.

14. Method according to claim 8,
**characterised in that**
all current drain tabs (5) and the corresponding electrically conducting outside of the individual cell are welded together, in particular at the same time, by means of a weld (S) extending in the stacking direction of the electrode foils (3), or **in that** all current drain tabs (5) and the corresponding electrically conducting outside of the individual cell are welded together by means of a weld (S) extending in the stacking direction of the electrode foils (3) through the latter.

## Revendications

1. Cellule individuelle pour une batterie comprenant un empilement d'électrodes (1) disposé à l'intérieur d'un boîtier de la cellule, les électrodes individuelles, de préférence des films d'électrodes (3), étant électriquement reliées à des cosses de dérivation de courant (5), les électrodes de différentes polarités au moins étant électriquement isolées les unes des autres par un séparateur (4), de préférence un film séparateur, pour ladite cellule individuelle des cosses de dérivation de courant (5) de même polarité étant reliés ensemble en un pôle de manière électriquement conductrice, une cosse de dérivation de courant (5) présentant une région de bord de chaque film d'électrodes (3) amenée vers l'extérieur de l'empilement d'électrodes (1) sur laquelle des cosses de dérivation de courant (5) d'un pôle sont compressées et / ou soudées ensemble de manière électriquement conductrice, **caractérisée en ce que**
le boîtier de cellule présente deux côtés plats (8) conducteurs électriquement et un cadre (6) électriquement isolant et périphériquement entourant disposé entre les côtés.

2. Cellule individuelle selon la revendication 1, **caractérisée en ce que** le cadre (6) présente deux reprises de matériau (7) écartées l'une de l'autre et isolées électriquement l'une de l'autre, dans lesdites reprises de matériau (7) sont disposées les cosses de dérivation de courant (5) de chaque polarité, la hauteur de passage (h) mesurée d'une reprise de matériau (7) dans la direction de l'empilement des films d'électrodes étant inférieure ou égale à l'étendue correspondante des cosses de dérivation de courant (5) respectives empilées les unes sur les autres de manière intacte et la profondeur (t) mesurée parallèlement au côté plat d'un film d'électrodes (3) étant supérieure ou égale à l'étendue correspondante des cosses de dérivation de courant (5) respectives.

3. Cellule individuelle selon la revendication 1, **caractérisée en ce que** les cosses de dérivation de courant (5) de chaque polarité sont reliées de manière électriquement conductrice à une région électriquement conductrice d'un côté extérieur du boîtier de cellule et **en ce que** les deux régions concernées de polarité différente sont isolées électriquement l'une de l'autre.

4. Cellule individuelle selon la revendication 3, **caractérisée en ce qu'**une région de polarité différente est à chaque fois un côté plat (8) d'un boîtier de cellule, de préférence une cellule plate (2).

5. Cellule individuelle selon la revendication 1, **caractérisée en ce que** les cosses de dérivation de courant (5) d'une polarité sont directement soudées et / ou comprimées à un côté extérieur, de préférence un côté plat (8) du boîtier de cellule, en particulier d'une cellule plate (2) et **en ce que** les côtés extérieurs de polarité différente sont isolés électriquement les uns des autres.

6. Cellule individuelle selon la revendication 1, **caractérisée en ce qu'**un cordon de soudure (S), vu dans la direction de l'empilement des films d'électrodes (3), comprend toutes les cosses de dérivation de courant (5) ou les traverse.

7. Cellule individuelle selon la revendication 1, **caractérisée en ce qu'**un cordon de soudure (S), vu dans la direction de l'empilement des films d'électrodes (3), comprend toutes les cosses de dérivation de courant (5) ainsi que les côtés extérieurs correspondants conducteurs électriquement de la cellule individuelle ou les traverse.

8. Procédé de fabrication d'une cellule individuelle pour une batterie, pour laquelle cellule individuelle est disposé à l'intérieur d'un boîtier de cellule un empilement d'électrodes (1), les électrodes individuelles, de préférence des films d'électrodes (3) sont reliées électriquement à des cosses de dérivation de courant (5), les électrodes étant électriquement isolées les unes des autres par un séparateur (4), de préférence un film séparateur, selon lequel des cosses de dérivation de courant (5) de même polarité sont reliées ensemble en un pôle de manière électriquement conductrice, une zone de bord de chaque film d'électrodes (3) amenée vers l'extérieur de l'empilement d'électrodes (1) étant sélectionnée comme cosse de dérivation de courant (5) et les cosses de dérivation de courant (5) d'un pôle étant comprimées et /ou soudées les unes avec les autres de manière électriquement conductrice, **caractérisé en ce que** le boîtier de cellule est muni de deux côtés plats (8) conducteurs électriquement, entre lesquels est placé un cadre (6) électriquement isolant et étant périphériquement entourant.

9. Procédé selon la revendication 8, **caractérisé en ce que** dans les cadres (6) sont disposées deux reprises de matériau (7) écartées l'une de l'autre et isolées électriquement l'une de l'autre, **en ce que** dans les reprises de matériau (7) sont placées des cosses de dérivation de courant (5) de même polarité, la hauteur de passage (h) mesurée d'une reprise de matériau (7) dans la direction de l'empilement des films d'électrodes (3) est inférieure ou égale à l'étendue correspondante des cosses de dérivation de courant (5) respectives empilées les unes sur les autres de manière intacte et la profondeur (t) mesurée parallèlement au côté plat d'un film d'électrodes (3) étant supérieure ou égale à l'étendue correspondante des cosses de dérivation de courant (5) respectives.

10. Procédé selon la revendication 8, **caractérisé en ce que** les cosses de dérivation de courant (5) de chaque polarité sont reliées de manière électriquement conductrice à une région électriquement conductrice d'un côté extérieur du boîtier de cellule et **en ce que** les deux régions concernées de polarité différente sont isolées électriquement l'une de l'autre.

11. Procédé selon la revendication 10, **caractérisé en ce qu'**un côté plat (8) d'un boîtier de cellule, de préférence une cellule plate (2), est sélectionnée comme zone de polarité différente.

12. Procédé selon la revendication 8, **caractérisé en ce que** les cosses de dérivation de courant (5) d'une polarité sont directement soudées et / ou comprimées directement à un côté extérieur, de préférence à un côté plat (8), du boîtier de cellule, en particulier d'une cellule plate (2) et **en ce que** les côtés extérieurs de polarité différente sont isolées électriquement les uns des autres.

13. Procédé selon la revendication 8, **caractérisé en ce que** par un cordon de soudure (S) vu dans la direction de l'empilement des films d'électrodes (3) toutes les cosses de dérivation de courant (5) sont soudées ensemble en particulier en une seule fois ou **en ce que** par un cordon de soudure (S) vu dans la direction de l'empilement des films d'électrodes (3) toutes les cosses de dérivation de courant (5) sont soudées ensemble en le traversant.

14. Procédé selon la revendication 8, **caractérisé en ce que** par un cordon de soudure (S) vu dans la direction de l'empilement des films d'électrodes (3) toutes les cosses de dérivation de courant (5) ainsi que le côté extérieur de la cellule individuelle correspondant conducteur électriquement sont soudés ensemble en particulier en une seule fois ou **en ce que** par un cordon de soudure (S) vu dans la direction de l'empilement des films d'électrodes (3) toutes les cosses de dérivation de courant (5) ainsi que le côté extérieur de la cellule individuelle correspondant conducteur électriquement sont soudés ensemble en le traversant.
